# EUROPÄISCHE PATENTSCHRIFT

(11) **EP 3 685 127 B1**
(45) Veröffentlichungstag und Bekanntmachung des Hinweises auf die Patenterteilung: **12.10.2022**
(21) Anmeldenummer: 18758873.6
(22) Anmeldetag: 22.08.2018
(51) Int. Cl.: G01F 1/698, F02D 41/18, F02D 41/22, F02D 41/14, G01F 1/699, G01F 1/684

(54) **VERFAHREN ZUM STEUERN EINES HEIZELEMENTS ZUM BEHEIZEN EINES SENSORELEMENTS EINES LUFTMASSENSENSORS FÜR EIN FAHRZEUG UND LUFTMASSENSENSORSYSTEM FÜR EIN FAHRZEUG**
METHOD FOR CONTROLLING A HEATING ELEMENT FOR HEATING A SENSOR ELEMENT OF A MASS AIR FLOW SENSOR FOR A VEHICLE AND MASS AIR FLOW SENSOR SYSTEM FOR A VEHICLE
PROCÉDÉ POUR COMMANDER UN ÉLÉMENT CHAUFFANT POUR CHAUFFER UN ÉLÉMENT SENSIBLE D'UN DÉBITMÈTRE D'AIR MASSIQUE POUR UN VÉHICULE ET SYSTÈME DE DÉBITMÈTRE D'AIR MASSIQUE POUR UN VÉHICULE

(30) Priorität: 20.09.2017 DE 102017216656
(43) Veröffentlichungstag der Anmeldung: 29.07.2020
(73) Patentinhaber: Robert Bosch GmbH, 70442 Stuttgart (DE)
(72) Erfinder: SCHWARTZKOPFF, Thomas, 71254 Ditzingen (DE); PLOGMANN, Benjamin, 73061 Rosswaelden (DE)
(86) Internationale Anmeldenummer: PCT/EP2018/072618
(87) Internationale Veröffentlichungsnummer: WO 2019/057428

(56) Entgegenhaltungen:
- WO-A2-2007/063396
- DE-A1-102005 061 550
- DE-A1-102011 081 923
- US-B2- 8 050 847

## Beschreibung

### Stand der Technik

Die Erfindung geht aus von einem Luftmassensensorsystem oder einem Verfahren nach Gattung der unabhängigen Ansprüche. Gegenstand der vorliegenden Erfindung ist auch ein Computerprogramm.

Ein Luftmassenmesser kann einem Luftfilter in einem Luftsystem eines Fahrzeugs nachgeschaltet sein, um eine genaue Bestimmung eines Luftmassenstroms vorzunehmen. Als Messelemente werden üblicherweise mikromechanische, siliziumbasierte Sensorelemente verwendet. In bestimmten Betriebszuständen kann es dazu kommen, dass sich Tau auf dem

Sensorelement bildet, was zu Fehlmessungen führen kann.

Die DE 10 2005 061550 A1 offenbart ein Verfahren zum Steuern eines Heizelements zum Beheizen eines Sensorelements eines Luftmassensensors für ein Fahrzeug, bei dem als Maßnahme nach Erkennen einer Kondensatbildung auf dem Sensorelement die nachfolgenden Messungen unberücksichtigt bleiben.

### Offenbarung der Erfindung

Vor diesem Hintergrund werden mit dem hier vorgestellten Ansatz ein Verfahren zum Steuern eines Heizelements zum Beheizen eines Sensorelements eines Luftmassensensors für ein Fahrzeug, weiterhin eine Vorrichtung, die dieses Verfahren verwendet, ein Luftmassensensorsystem für ein Fahrzeug sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird ein Verfahren zum Steuern eines Heizelements zum Beheizen eines Sensorelements eines Luftmassensensors für ein Fahrzeug vorgestellt, wobei der Luftmassensensor einen Temperaturfühler zum Messen einer Temperatur des Sensorelements aufweist, wobei das Verfahren folgende Schritte umfasst:
Auswerten eines unter Verwendung des Temperaturfühlers während eines Betriebs des Fahrzeugs aufgenommenen Temperaturverlaufs, um eine Taubildung auf dem Sensorelement zu erkennen; und
Erzeugen eines Einschaltsignals zum Einschalten des Heizelements ansprechend auf das Erkennen der Taubildung.

Unter einem Heizelement kann beispielsweise eine Chipheizung, beispielsweise in Form einer Widerstandsheizung, verstanden werden. Unter einem Sensorelement kann beispielsweise ein mikromechanisches Sensorelement zum Messen eines Luftmassenstroms verstanden werden. Unter einem Luftmassensensor kann beispielsweise ein im Ansaugsystem eines Diesel- oder Ottomotors des Fahrzeugs platzierter Heißfilm- oder Hitzdrahtluftmassenmesser verstanden werden. Bei dem Temperaturverlauf kann es sich um eine Temperaturkurve zur zeitabhängigen Darstellung einer Temperaturänderung des Sensorelements handeln. Beispielsweise kann der Temperaturverlauf von dem Temperaturfühler bei Inbetriebnahme des Fahrzeugs, insbesondere beim Starten des Motors des Fahrzeugs, aufgenommen werden. Insbesondere kann der Temperaturverlauf während des Einsaugens von Luft in ein Luftsystem des Fahrzeugs aufgenommen worden sein. Unter einer Taubildung kann ein Niederschlag von Kondensat an einer Oberfläche des Sensorelements, etwa infolge von Schwankungen einer Umgebungstemperatur, verstanden werden.

Erfindungsgemäß wird der Verlauf der Steigung des Temperaturverlaufs beim Auswerten mit einem Referenzverlauf verglichen, um die Taubildung abhängig von einem Ergebnis dieses Vergleichs zu erkennen.

Der hier vorgestellte Ansatz beruht auf der Erkenntnis, dass eine Chipheizung zum Beheizen eines Sensorelements eines Luftmassensensors anhand eines während eines Messbetriebs ermittelten Temperaturverlaufs des Sensorelements derart angesteuert werden kann, dass eine Taubildung auf dem Sensorelement durch rechtzeitiges Erwärmen des Sensorelements verhindert werden kann. Durch einen derartigen algorithmusbasierten Kondensationsschutz können Fehlmessungen wirksam vermieden werden.

Erfindungsgemäß wird im Schritt des Auswertens eine Steigung des Temperaturverlaufs ermittelt, um die Taubildung anhand der Steigung zu erkennen. Dadurch kann die Taubildung zuverlässig erkannt werden.

Erfindungsgemäß wird im Schritt des Auswertens der Steigung des Temperaturverlauf mit einem Referenzverlauf verglichen, um die Taubildung zu erkennen. Unter einem Referenzverlauf kann beispielsweise ein Temperatursprung des Sensorelements bei ansteigender Umgebungstemperatur, jedoch ohne Taubildung auf dem Sensorelement verstanden werden. Dadurch kann die Taubildung mit verhältnismäßig geringem Rechenaufwand ausreichend genau erkannt werden.

Erfindungsgemäß wird im Schritt des Auswertens die Taubildung erkannt, wenn der Temperaturverlauf in einem vorgegebenen Auswertezeitraum eine größere Steigung als der Referenzverlauf aufweist. Dadurch kann die Taubildung besonders einfach und zuverlässig erkannt werden.

Zudem kann im Schritt des Auswertens ein unter Verwendung des Temperaturfühlers ansprechend auf ein Starten eines Motors des Fahrzeugs oder im Betrieb aufgenommener Temperaturverlauf ausgewertet werden. Dadurch kann die Taubildung beim Starten des Motors erkannt werden und somit eine nachfolgende Fehlfunktion des Sensorelements frühzeitig verhindert werden.

Es kann im Schritt des Erzeugens das Einschaltsignal erzeugt werden, um das Heizelement während des Betriebs des Fahrzeugs einzuschalten. Dadurch kann die Taubildung während des Betriebs des Fahrzeugs, d. h. bei laufendem Motor, verhindert werden. Das Verfahren kann einen Schritt des Aufnehmens des Temperaturverlaufs durch Filtern eines von dem Temperaturfühler während des Betriebs des Fahrzeugs erzeugten und die Temperatur des Sensorelements repräsentierenden Temperatursignals umfassen. Insbesondere kann das Temperatursignal dabei tiefpassgefiltert werden. Dadurch können Messungenauigkeiten verringert werden.

Des Weiteren kann im Schritt des Erzeugens ein Abschaltsignal zum Abschalten des Heizelements nach Ablauf einer vorgegebenen Einschaltdauer, während der das Heizelement eingeschaltet ist, erzeugt werden. Dadurch kann eine übermäßige thermische Belastung des Sensorelements verhindert werden. Gemäß einer weiteren Ausführungsform kann in einem Schritt des Bestimmens die Einschaltdauer abhängig von einem von dem Sensorelement gemessenen Luftmassenstrom, von einer von dem Temperaturfühler gemessenen Anfangstemperatur des Sensorelements, von einer von dem Temperaturfühler gemessenen aktuellen Temperatur des Sensorelements oder von einer Kombination aus zumindest zwei der genannten Messgrößen bestimmt werden. Durch diese Ausführungsform können die Genauigkeit des Verfahrens sowie die Robustheit des Verfahrens gegenüber Umgebungseinflüssen deutlich gesteigert werden.

Dieses Verfahren kann beispielsweise in Software oder Hardware oder in einer Mischform aus Software und Hardware, beispielsweise in einem Steuergerät, implementiert sein.

Der hier vorgestellte Ansatz schafft ferner ein Luftmassensensorsystem, welches ausgebildet ist, um die Schritte einer Variante eines hier vorgestellten Verfahrens in entsprechenden Einrichtungen durchzuführen.

Auch durch diese Ausführungsvariante der Erfindung kann die der Erfindung zugrunde liegende Aufgabe schnell und effizient gelöst werden.

Hierzu kann das Luftmassensensorsystem zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Das Luftmassensensorsystem kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Luftmassensensorsystems beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt eine Steuerung des Fahrzeugs. Hierzu kann die Vorrichtung beispielsweise auf Sensorsignale wie Beschleunigungs-, Druck-, Lenkwinkel- oder Umfeldsensorsignale zugreifen. Die Ansteuerung erfolgt über Aktoren wie Brems- oder Lenkaktoren oder ein Motorsteuergerät des Fahrzeugs.

Darüber hinaus schafft der hier vorgestellte Ansatz ein Luftmassensensorsystem für ein Fahrzeug, wobei das Luftmassensensorsystem folgende Merkmale aufweist:
einen Luftmassensensor mit einem Sensorelement zum Messen eines Luftmassenstroms, einem Temperaturfühler zum Messen einer Temperatur des Sensorelements und einem Heizelement zum Beheizen des Sensorelements; und
Einheiten, die ausgebildet sind, um das weiter oben beschriebene Verfahren auszuführen.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, wenn das Programmprodukt oder Programm auf einer der Einheiten des oben beschriebenen Luftmassensensorsystems ausgeführt wird.

Ausführungsbeispiele der Erfindung sind in den Zeichnungen dargestellt und in der nachfolgenden Beschreibung näher erläutert. Es zeigt:
- Fig. 1: eine schematische Darstellung eines Fahrzeugluftsystems mit einem Luftmassensensor gemäß einem Ausführungsbeispiel;
- Fig. 2: eine schematische Darstellung eines Luftmassensensors aus Fig. 1;
- Fig. 3: eine schematische Darstellung eines Sensorelements aus Fig. 2;
- Fig. 4: eine schematische Darstellung einer Vorrichtung gemäß einem Ausführungsbeispiel;
- Fig. 5: ein Diagramm zur Darstellung von Temperaturverläufen zur Auswertung mittels einer Vorrichtung gemäß einem Ausführungsbeispiel; und
- Fig. 6: ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

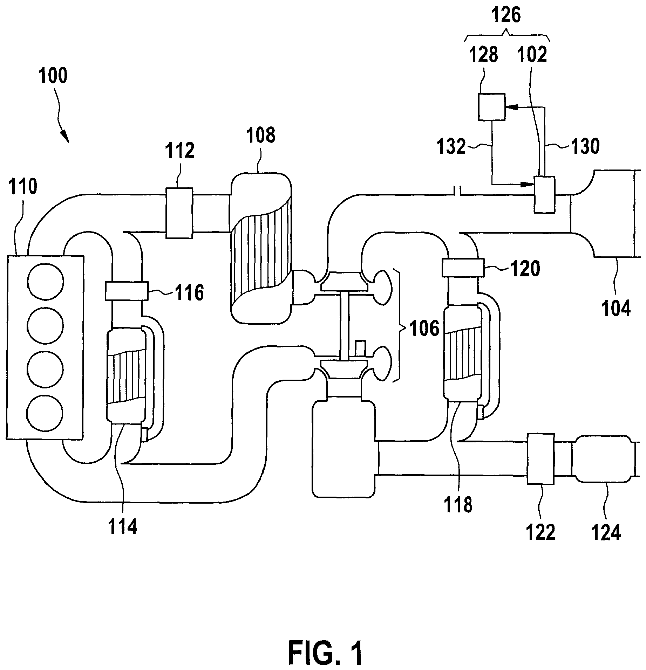

Fig. 1 zeigt eine schematische Darstellung eines Fahrzeugluftsystems 100 mit einem Luftmassensensor 102 gemäß einem Ausführungsbeispiel. Das Fahrzeugluftsystem 100 umfasst einen Luftfilter 104, durch den Luft in das Fahrzeugluftsystem 100 eingesaugt wird. Der Luftmassensensor 102, hier beispielhaft als Heißfilmluftmassenmesser realisiert, ist dem Luftfilter 104 nachgeschaltet und ausgebildet, um einen über den Luftfilter 104 eingesaugten Luftmassenstrom zu erfassen. Der Luftmassenstrom wird über einen Verdichter eines Variable-Turbinengeometrie-Laders 106 verdichtet und gelangt von dort in einen Ladeluftluftkühler 108. Der Ladeluftluftkühler 108 ist ausgangsseitig mit einem Lufteinlass eines Motors 110 des Fahrzeugs verbunden. Eine Drosselklappe 112 ist ausgebildet, um den aus dem Ladeluftluftkühler 108 ausströmenden Luftmassenstrom zu steuern. Ein Luftauslass des Motors 110 ist über einen Abgasrückführungskühler 114 mit nachgeschaltetem Abgasrückführungsventil 116 mit dem Lufteinlass koppelbar. Die vom Motor 110 ausgestoßenen Abgase gelangen zurück zum Variable-Turbinengeometrie-Laders 106, wo sie eine Turbine antreiben, die auf der gleichen Welle wie der Verdichter sitzt und diesen somit antreibt. Ein weiterer Abgasrückführungskühler 118 mit nachgeschaltetem weiterem Abgasrückführungsventil 120 dient zur Abgasrückführung zwischen einer Turbinenseite und einer Verdichterseite des Variable-Turbinengeometrie-Laders 106. Ein nicht rückgeführter Anteil der Abgase gelangt über eine Abgasklappe 122 in eine Auspuffanlage 124 des Fahrzeugs.

Der Luftmassensensor 102 ist Teil eines Luftmassensensorsystems 126 mit einer Vorrichtung 128, die mit dem Luftmassensensor 102 gekoppelt ist, um ein vom Luftmassensensor 102 während eines Betriebs des Fahrzeugs aufgenommenes Temperatursignal 130, das einen Verlauf einer Temperatur eines Sensorelements des Luftmassensensors 102 repräsentiert, auszuwerten und abhängig von der Auswertung eine Chipheizung zum Beheizen des Sensorelements anzusteuern. Zum Einschalten der Chipheizung stellt die Vorrichtung 128 ein entsprechendes Einschaltsignal 132 bereit. Durch eine derartige Ansteuerung der Chipheizung kann eine Taubildung auf dem Sensorelement zuverlässig verhindert werden.

Gemäß einem Ausführungsbeispiel ist die Vorrichtung 128 ausgebildet, um die Chipheizung bei abgestelltem Fahrzeug zu aktivieren. Somit wird verhindert, dass sich Ölkondensat auf dem Sensorelement niederschlägt. In diesem Fall wird also kein den Luftmassenstrom repräsentierendes Luftmassensignal an ein Steuergerät des Fahrzeugs geliefert. Insbesondere dient die Vorrichtung 128 jedoch vorrangig zur Aktivierung der Chipheizung während eines Normalbetriebs, um das Sensorelement während des Normalbetriebs in geeigneter Weise zu erwärmen. Dies hat zwei Auswirkungen: Zum einen wird dadurch eine Taupunkttemperatur am Sensorelement schneller überschritten, was die Taubildung am Sensorelement verhindert; zum anderen wird dadurch erreicht, dass der größte Teil der Taubildung auf den umliegenden Flächen des Sensorelements, die kälter als das Sensorelement sind, stattfindet.

Eine Betauung setzt in der Regel dann ein, wenn die Oberfläche des Sensorelements, das beispielsweise als Steckfühler realisiert ist, kälter als die durchströmende Luft ist und der Taupunkt der Oberfläche unterhalb des Taupunkts der umströmenden Luft liegt. Dies tritt beispielsweise auf, wenn ein Umgebungswechsel von einer kühlen in eine warme, feuchte Umgebung stattfindet. Sobald am Sensorelement Taubildung einsetzt, wird durch den Phasenübergang des Wassers von gasförmig zu flüssig sehr viel Energie frei. Diese Energie führt dazu, dass sich ein auf dem Sensorelement angebrachter Temperaturfühler wesentlich schneller erwärmt, als wenn keine Taubildung auftritt. Über eine geeignete Auswertung eines Temperaturgradienten mittels der Vorrichtung 128 kann nun der Zustand der Taubildung sicher vom Zustand eines reinen Temperatursprungs unterschieden werden. Ein dabei verwendeter Algorithmus sollte schnell genug sein, um die Chipheizung so schnell zu aktivieren, dass noch keine nennenswerten Messfehler aufgrund von Taubildung auftreten.

Gemäß einem Ausführungsbeispiel weist der Erkennungsalgorithmus folgenden Ablauf auf.
1. Die Temperatur des Sensorelements wird kontinuierlich gemessen.
2. Optional erfolgt eine Filterung, etwa eine Tiefpassfilterung, des Temperatursignals 130.
3. Auf Basis des Temperatursignals 130 wird ein Gradient berechnet.
4. Der Gradient wird bewertet, beispielsweise über einen definierbaren Schwellenwert oder eine Kombination aus mehreren geeigneten Parametern wie beispielsweise aus Schwellenwert und absoluter Temperatur.
5. Die Chipheizung wird abhängig von der Bewertung des Gradienten eingeschaltet.
6. Schließlich wird die Chipheizung nach einer definierten Einschaltdauer wieder abgeschaltet. Das Abschalten der Chipheizung erfolgt beispielsweise durch Vorgabe einer festen Zeit über eine reine Zeitsteuerung oder auch über eine Zeitsteuerung, in der die Einschaltdauer aus verschiedenen Parametern bestimmt wird, wie etwa aktuelle Luftmasse, Anfangstemperatur des Sensorelements, aktuelle Temperatur des Sensorelements oder eine Kombination aus zumindest zwei der genannten Größen.

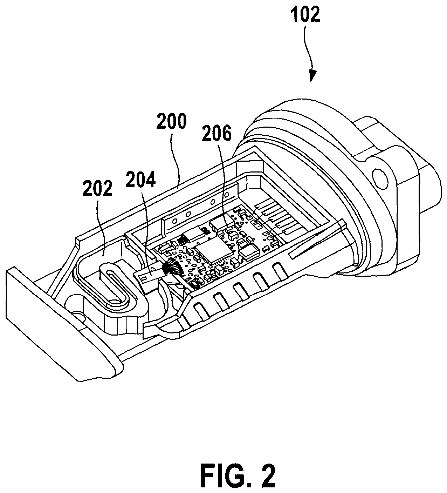

Fig. 2 zeigt eine schematische Darstellung eines Luftmassensensors 102 aus Fig. 1. Der Luftmassensensor 102 ist als Einsteckfühler realisiert und umfasst ein Sensorgehäuse 200 mit einem Bypasskanal 202 zum Leiten von Luft zu einem mikromechanischen Sensorelement 204 zum Erfassen des Luftmassenstroms und ein elektronisches Modul 206 zur Signalverarbeitung.

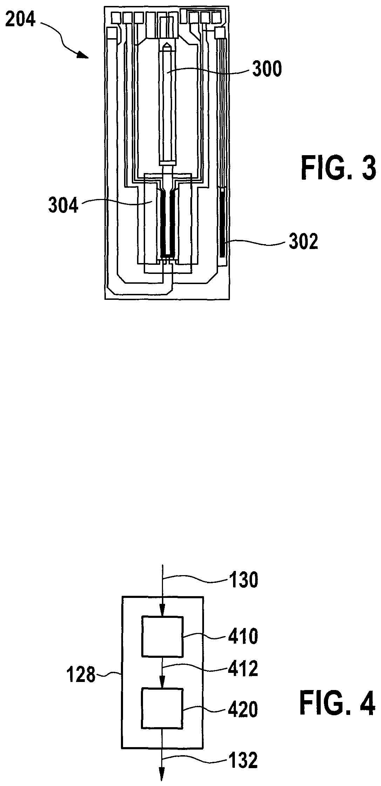

Fig. 3 zeigt eine schematische Darstellung eines Sensorelements 204 eines Luftmassensensors aus Fig. 2. Gezeigt sind ein mit dem Sensorelement 204 thermisch gekoppeltes Heizelement 300, das als Chipheizung zum Beheizen des Sensorelements 204 fungiert, etwa um Ölkondensat auf dem Sensorelement 204 zu verhindern, ein Temperaturfühler 302 zum Erfassen der Temperatur des Sensorelements 204 sowie eine Sensormembran 304 des Sensorelements 204.

Fig. 4 zeigt eine schematische Darstellung einer Vorrichtung 128 gemäß einem Ausführungsbeispiel, etwa einer vorangehend anhand der Figuren 1 bis 3 beschriebenen Vorrichtung. Die Vorrichtung 128 umfasst eine Auswerteeinheit 410 zum Auswerten des unter Verwendung des Temperaturfühlers während des Betriebs des Fahrzeugs aufgenommenen Temperaturverlaufs anhand des Temperatursignals 130. Eine Erzeugungseinheit 420 ist ausgebildet, um unter Verwendung eines von der Auswerteeinheit 410 erzeugten Ergebniswerts 412 das Einschaltsignal 132 zum Einschalten des Heizelements zu erzeugen. Beispielsweise erzeugt die Erzeugungseinheit 420 das Einschaltsignal 132, wenn der Ergebniswert 412 eine erkannte beginnende oder bevorstehende Taubildung am Sensorelement repräsentiert.

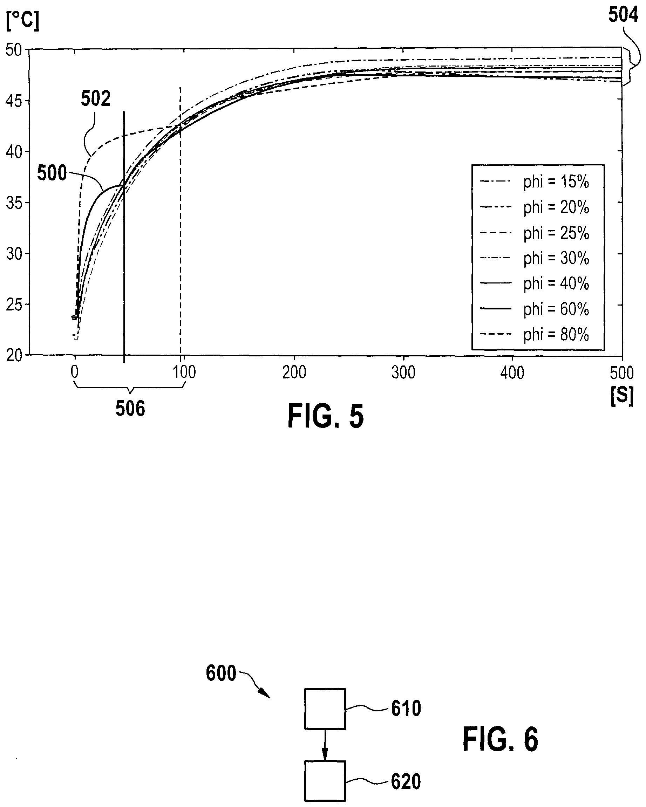

Fig. 5 zeigt ein Diagramm zur Darstellung von Temperaturverläufen zur Auswertung mittels einer Vorrichtung gemäß einem Ausführungsbeispiel, etwa einer vorangehend anhand der Figuren 1 bis 4 beschriebenen Vorrichtung. Gezeigt sind beispielhaft eine erste Kurve 500, die einen Temperaturverlauf des Sensorelements bei einer relativen Luftfeuchtigkeit von 60 Prozent repräsentiert, eine zweite Kurve 502, die einen Temperaturverlauf des Sensorelements bei einer relativen Luftfeuchtigkeit von 80 Prozent repräsentiert, sowie eine Mehrzahl weiterer Kurven 504, die einen bei einer relativen Luftfeuchtigkeit von 15, 20, 25, 30 und 40 Prozent erfassten Temperaturverlauf des Sensorelements repräsentieren. Alle Kurven 500, 502, 504 haben eine Umgebungstemperatur von 20 Grad Celsius zum Ausgangspunkt. Dieser Ausgangspunkt repräsentiert beispielsweise einen Zeitpunkt, zu dem der Motor des Fahrzeugs gestartet wird.

Die Kurven 500, 502 weisen im Vergleich zu den Kurven 504 innerhalb einer Auswertedauer 506, während der die Temperaturverläufe von der Vorrichtung ausgewertet werden, jeweils eine deutlich höhere Steigung auf. Anhand dieser deutlich höheren Steigung kann auf eine beginnende Taubildung am Sensorelement geschlossen werden. Die Kurven 504 fungieren in diesem Sinne als Referenzverläufe zur Erkennung der Taubildung anhand der jeweiligen Steigung der Temperaturverläufe.

Die Auswertedauer 506 beträgt beispielsweise zwischen 20 und 100 Sekunden.

Fig. 6 zeigt ein Ablaufdiagramm eines Verfahrens 600 gemäß einem Ausführungsbeispiel. Das Verfahren 600 zum Steuern eines Heizelements zum Beheizen eines Sensorelements eines Luftmassensensors für ein Fahrzeug kann beispielsweise von einer vorangehend anhand der Figuren 1 bis 5 beschriebenen Vorrichtung ausgeführt werden. Dabei wird in einem Schritt 610 der unter Verwendung des Temperaturfühlers während des Betriebs des Fahrzeugs aufgenommene Temperaturverlauf des Sensorelements ausgewertet, um die Taubildung auf dem Sensorelement zu erkennen. In einem weiteren Schritt 620 wird ansprechend auf das Erkennen der Taubildung das Einschaltsignal zum Einschalten des Heizelements erzeugt.

Die Schritte 610, 620 können fortlaufend ausgeführt werden, insbesondere während eines Betriebs des Fahrzeugs bei laufendem Motor.

## Patentansprüche

1. Verfahren (600) zum Steuern eines Heizelements (302) zum Beheizen eines Sensorelements (204) eines Luftmassensensors (102) für ein Fahrzeug, wobei der Luftmassensensor (102) einen Temperaturfühler (302) zum Messen einer Temperatur des Sensorelements (204) aufweist, wobei das Verfahren (600) folgende Schritte umfasst:
Auswerten (610) eines unter Verwendung des Temperaturfühlers (302) während eines Betriebs des Fahrzeugs aufgenommenen Temperaturverlaufs (500, 502), und
Erzeugen (620) eines Einschaltsignals (132) zum Einschalten des Heizelements (302), wobei bei dem Schritt des Auswertens (610) eine Steigung des Temperaturverlaufs (500, 502) ermittelt wird, **dadurch gekennzeichnet, dass** bei dem im Schritt des Auswertens (610) der Temperaturverlauf (500, 502) mit zumindest einem Referenzverlauf (504) verglichen wird, um eine Taubildung auf dem Sensorelement (204) anhand der Steigung zu erkennen, wobei die Taubildung erkannt wird, wenn der Temperaturverlauf (500, 502) in einem vorgegebenen Auswertezeitraum (506) eine größere Steigung als der Referenzverlauf (504) aufweist, und dass bei dem Schritt des Erzeugens (620) das Einschaltsignal (132) ansprechend auf das Erkennen der Taubildung erzeugt wird.

2. Verfahren (600) gemäß einem der vorangegangenen Ansprüche, bei dem im Schritt des Auswertens (610) ein unter Verwendung des Temperaturfühlers (302) ansprechend auf ein Starten eines Motors des Fahrzeugs aufgenommener Temperaturverlauf (500, 502) ausgewertet wird.

3. Verfahren (600) gemäß einem der vorangegangenen Ansprüche, bei dem im Schritt des Erzeugens (620) das Einschaltsignal (132) erzeugt wird, um das Heizelement (302) während des Betriebs des Fahrzeugs einzuschalten.

4. Verfahren (600) gemäß einem der vorangegangenen Ansprüche, mit einem Schritt des Aufnehmens des Temperaturverlaufs (500, 502) durch Filtern eines von dem Temperaturfühler (302) während des Betriebs des Fahrzeugs erzeugten und die Temperatur des Sensorelements (204) repräsentierenden Temperatursignals (130), insbesondere wobei das Temperatursignal (130) tiefpassgefiltert wird.

5. Verfahren (600) gemäß einem der vorangegangenen Ansprüche, bei dem im Schritt des Erzeugens (620) ein Abschaltsignal zum Abschalten des Heizelements (302) nach Ablauf einer vorgegebenen Einschaltdauer, während der das Heizelement (302) eingeschaltet ist, erzeugt wird.

6. Verfahren (600) gemäß Anspruch 5, mit einem Schritt des Bestimmens der Einschaltdauer abhängig von einem von dem Sensorelement (204) gemessenen Luftmassenstrom und/oder von einer von dem Temperaturfühler (302) gemessenen Anfangstemperatur des Sensorelements (204) und/oder von einer von dem Temperaturfühler (302) gemessenen aktuellen Temperatur des Sensorelements (204).

7. Luftmassensensorsystem (126) für ein Fahrzeug, wobei das Luftmassensensorsystem (126) folgende Merkmale aufweist:
einen Luftmassensensor (102) mit einem Sensorelement (204) zum Messen eines Luftmassenstroms, einem Temperaturfühler (302) zum Messen einer Temperatur des Sensorelements (204) und einem Heizelement (302) zum Beheizen des Sensorelements (204); und
Einheiten (410, 420), die ausgebildet sind, um das Verfahren (600) gemäß einem der Ansprüche 1 bis 6 auszuführen.

8. Computerprogramm, das ausgebildet ist, um das Verfahren (600) gemäß einem der Ansprüche 1 bis 6 auszuführen, wenn es auf einer der Einheiten des Luftmassensensorsystems gemäß Anspruch 7 ausgeführt wird.

9. Maschinenlesbares Speichermedium, auf dem das Computerprogramm nach Anspruch 8 gespeichert ist.

## Claims

1. Method (600) for controlling a heating element (302) for heating a sensor element (204) of an air mass sensor (102) for a vehicle, wherein the air mass sensor (102) has a temperature sensor (302) for measuring a temperature of the sensor element (204), wherein the method (600) comprises the following steps of:
evaluating (610) a temperature profile (500, 502) recorded during operation of the vehicle using the temperature sensor (302), and
generating (620) a switch-on signal (132) for switching on the heating element (302), wherein a gradient of the temperature profile (500, 502) is determined in the evaluating step (610), **characterized in that** the temperature profile (500, 502) is compared with at least one reference profile (504) in the evaluating step (610) in order to detect formation of dew on the sensor element (204) on the basis of the gradient, wherein the formation of dew is detected when the temperature profile (500, 502) has a greater gradient than the reference profile (504) in a predefined evaluation period (506), and **in that** the switch-on signal (132) is generated in response to the detection of the formation of dew in the generating step (620).

2. Method (600) according to one of the preceding claims, in which a temperature profile (500, 502) recorded using the temperature sensor (302) in response to an engine of the vehicle being started is evaluated in the evaluating step (610).

3. Method (600) according to one of the preceding claims, in which the switch-on signal (132) is generated in the generating step (620) in order to switch on the heating element (302) during operation of the vehicle.

4. Method (600) according to one of the preceding claims, having a step of recording the temperature profile (500, 502) by filtering a temperature signal (130) which is generated by the temperature sensor (302) during operation of the vehicle and represents the temperature of the sensor element (204), in particular wherein the temperature signal (130) is subjected to lowpass filtering.

5. Method (600) according to one of the preceding claims, in which a switch-off signal for switching off the heating element (302) after expiry of a predefined switched-on duration, during which the heating element (302) is switched on, is generated in the generating step (620) .

6. Method (600) according to Claim 5, having a step of determining the switched-on duration on the basis of an air mass flow measured by the sensor element (204) and/or an initial temperature of the sensor element (204) that is measured by the temperature sensor (302) and/or a current temperature of the sensor element (204) that is measured by the temperature sensor (302).

7. Air mass sensor system (126) for a vehicle, wherein the air mass sensor system (126) has the following features:
an air mass sensor (102) having a sensor element (204) for measuring an air mass flow, a temperature sensor (302) for measuring a temperature of the sensor element (204) and a heating element (302) for heating the sensor element (204); and
units (410, 420) which are designed to carry out the method (600) according to one of Claims 1 to 6.

8. Computer program which is designed to carry out the method (600) according to one of Claims 1 to 6 when it is executed on one of the units of the air mass sensor system according to Claim 7.

9. Machine-readable storage medium on which the computer program according to Claim 8 is stored.

## Revendications

1. Procédé (600) de commande d'un élément chauffant (302) destiné à chauffer un élément de détection (204) d'un capteur de masse d'air (102) destiné à un véhicule, le capteur de masse d'air (102) comportant une sonde de température (302) destinée à mesurer la température de l'élément de détection (204), le procédé (600) comprenant les étapes suivantes :
évaluer (610) un profil de température (500, 502) enregistré à l'aide de la sonde de température (302) pendant le fonctionnement du véhicule, et
générer (620) un signal d'activation (132) destiné à activer l'élément chauffant (302), la pente du profil de température (500, 502) étant déterminée à l'étape d'évaluation (610), **caractérisé en ce que** le profil de température (500, 502) est comparé à au moins un profil de référence (504) à l'étape d'évaluation (610) pour détecter la formation de rosée sur l'élément de détection (204) sur la base de la pente, la formation de rosée étant détectée lorsque le profil de température (500, 502) a une pente supérieure à celle du profil de référence (504) dans un intervalle d'évaluation spécifié (506), et **en ce qu'**à l'étape de génération (620) le signal d'activation (132) est généré en réponse à la détection de la formation de rosée.

2. Procédé (600) selon l'une des revendications précédentes, dans lequel un profil de température (500, 502) enregistré à l'aide de la sonde de température (302) en réponse au démarrage d'un moteur du véhicule est évalué à l'étape d'évaluation (610).

3. Procédé (600) selon l'une des revendications précédentes, dans lequel à l'étape de génération (620) le signal d'activation (132) est généré afin d'activer l'élément chauffant (302) pendant le fonctionnement du véhicule.

4. Procédé (600) selon l'une des revendications précédentes, comprenant une étape d'enregistrement du profil de température (500, 502) par filtrage d'un signal de température (130) qui est généré par la sonde de température (302) pendant le fonctionnement du véhicule et qui représente la température de l'élément de détection (204), en particulier le signal de température (130) étant soumis à un filtrage passe-bas.

5. Procédé (600) selon l'une des revendications précédentes, dans lequel, à l'étape de génération (620), un signal de désactivation de l'élément chauffant (302) est généré après une durée d'activation spécifiée pendant laquelle l'élément chauffant (302) est activé.

6. Procédé (600) selon la revendication 5, comprenant une étape de détermination de la durée d'activation en fonction d'un débit massique d'air mesuré par l'élément de détection (204) et/ou de la température initiale, mesurée par la sonde de température (302), de l'élément de détection (204) et/ou de la température actuelle, mesurée par la sonde de température (302), de l'élément de détection (204).

7. système de capteur de masse d'air (126) destiné à un véhicule, le système de capteur de masse d'air (126) présentant les caractéristiques suivantes :
un capteur de masse d'air (102) comportant un élément de détection (204) destiné à mesurer un débit massique d'air, une sonde de température (302) destinée à mesurer la température de l'élément de détection (204) et un élément chauffant (302) destiné à chauffer l'élément de détection (204) ; et
des unités (410, 420) conçues pour mettre en œuvre le procédé (600) selon l'une des revendications 1 à 6.

8. Logiciel destiné à mettre en œuvre le procédé (600) selon l'une des revendications 1 à 6 lorsqu'il est exécuté sur l'une des unités du système de capteur de masse d'air selon la revendication 7.

9. Support de stockage lisible par machine sur lequel le logiciel selon la revendication 8 est stocké.
